# EUROPÄISCHE PATENTANMELDUNG

(11) **EP 2 163 600 A2**
(43) Veröffentlichungstag der Anmeldung: **17.03.2010**
(21) Anmeldenummer: 09010142.9
(22) Anmeldetag: 06.08.2009
(51) Int. Cl.: C10L 5/44

(54) **Verfahren zur Herstellung von Brennstoffpresslingen auf der Basis von Biomasse sowie Vorrichtung zur Durchführung des Verfahrens**

(30) Priorität: 03.09.2008 DE 102008045520
(71) Anmelder: RWE Power Aktiengesellschaft, 45128 Essen (DE)
(72) Erfinder: Lange, Raimund, 50226 Frechen (DE); Menge, Franz-Josef, 50259 Pulheim (DE)
(74) Vertreter: Polypatent

(57) **Zusammenfassung**

Die Erfindung betrifft ein Verfahren zur Herstellung von Brennstoff-Presslingen auf der Basis von Biomasse, wobei das biogene Ausgangsmaterial getrocknet und zerkleinert sowie ggf. mit anderen biogenen Ausgangsmaterialien und/oder Bindemittel und/oder fossilen thermisch verwertbaren Materialien gemischt wird und die Mischung einer Pressagglomeration unterzogen wird. Die Pressagglomeration erfolgt in einer Formkanalstempelpresse, die für die Verpressung von Materialien geringer Schüttdichte modifiziert ist.

## Beschreibung

Die Erfindung betrifft ein Verfahren zur Herstellung von Brennstoff-Presslingen auf der Basis von Biomasse sowie eine Vorrichtung zur Durchführung des Verfahrens.

Unter Biomasse im Sinne der Erfindung ist organisches pflanzliches Material zu verstehen, nicht hingegen fallen unter diesen Begriff die sogenannten fossilen Brennstoffe wie beispielsweise Braunkohle oder Steinkohle, Torf, Xylith oder dergleichen. "Auf der Basis von Biomasse im Sinne der Erfindung" bedeutet, dass der erhaltene Brennstoff-Pressling zumindest überwiegend, d. h. zu mehr als 30%, vorzugsweise zu mehr als 50 % aus Biomasse besteht.

Unter dem Begriff "Biomasse" sind beispielsweise alle Arten von Hölzern sowie lignozellulosehaltige Materialien zusammenzufassen.

Grundsätzlich ist es bekannt, beispielsweise frisches Holz in Form von Sägemehl, Sägespänen und dergleichen zu Brennstoffbriketts zu verarbeiten. Dabei wirkt in der Regel das Lignin des Holzes als Bindemittel. Solche Briketts finden überwiegend zur Verbrennung in Haushalten Anwendungen, wobei sie speziell anstelle von Holzscheiten bei der Feuerung in Kaminen eingesetzt werden können. Diese Holzbriketts verbrennen ohne die Entstehung umweltbelastender Gase und unter geringer Aschebildung. Sie sind daher für den Hausbrand und für die Industrieverbrennung grundsätzlich zulässig und geeignet. Üblicherweise werden solche Brennstoffbriketts mit Extruderschneckenpressen oder Matrizenpressen mit verhältnismäßig hohem Druck hergestellt. Insbesondere bei der Verarbeitung mittels Extruderschneckenpressen wird das Material durch die hohe Verdichtung stark erwärmt, was den Vorzug hat, das während der Verpressung überschüssige Feuchtigkeit weitestgehend verdampft. Durch das als Bindemittel wirkende Lignin des Holzes entsteht beim Verpressen ein fester Verbund zwischen den einzelnen Holzteilchen.

Derartige Briketts erfreuen sich in jüngster Zeit großer Beliebtheit, diese sind allerdings mit dem Nachteil behaftet, dass das Herstellungsverfahren energetisch verhältnismäßig aufwendig ist. Insbesondere sind die Pressen verhältnismäßig teuer und unterliegen wegen des hohen Pressdrucks einem starken Verschleiß.

Der Erfindung liegt daher die Aufgabe zugrunde, ein Verfahren zur Herstellung von Brennstoff-Presslingen auf der Basis von Biomasse bereitzustellen, welches besonders einfach ist und sich insbesondere für die industrielle Massenfertigung von Biomasse-Briketts eignet.

Die Aufgabe wird gemäß der Erfindung durch ein Verfahren zur Herstellung von Brennstoff-Presslingen auf der Basis von Biomasse gelöst, bei welchem das biogene Ausgangsmaterial getrocknet und zerkleinert wird und das getrocknete und zerkleinerte Material durch Pressagglomeration stückig gemacht wird und wobei die Pressagglomeration unter Verwendung einer Formkanalstempelpresse erfolgt.

Solche Formkanalstempelpressen werden üblicherweise zur bindemittellosen Brikettierung von Trockenbraunkohle verwendet. Derartige Formkanalstempelpressen sind beispielsweise mit Schubkurbel- oder Kniegelenkantrieb bekannt. Diese umfassen einen oder mehrere längliche Formkanäle, in denen ein Pressstempel mittels einer Schubstange hin und her bewegt wird. Der Formkanal erstreckt sich in der Regel horizontal und ist in Richtung des Materialdurchsatzes trichterförmig verjüngt, wobei der engste Querschnitt des Formkanals in etwa dem Querschnitt des zu fertigenden Presslings entspricht. Der Formkanal wird in einem Einzugsbereich von einem Füllschacht mit Material beschickt, welches von Schwerkraft unterstützt in den Formkanal eintritt und dort von dem sich periodisch hin und her bewegenden Pressstempel unter Verdichtung in den Formkanal gestopft wird.

Formkanalstempelpressen sind konstruktiv verhältnismäßig einfach und für einen hohen Durchsatz ausgelegt.

Überraschenderweise hat sich herausgestellt, dass Formkanalstempelpressen auch besonders wirkungsvoll für die Herstellung von Brennstoff-Presslingen aus biogenen Massen eingesetzt werden können. Wider Erwarten eignen sich bekannte Formkanalstempelpressen auch zur Agglomeration von biogenen Massen, gegebenenfalls unter Verwendung eines Bindemittels.

So kann beispielsweise bei einer Variante des Verfahrens nach der Erfindung vorgesehen sein, dass der biogenen Ausgangsmasse vor der Verpressung ein Bindemittel beigemischt wird.

Zweckmäßigerweise wird die biogene Ausgangsmasse auf einen Wassergehalt von 0 bis 30 Masseprozent, vorzugsweise auf einen Wassergehalt von 5 bis 10 Masseprozent getrocknet.

Die biogene Ausgangsmasse kann beispielsweise auf eine durchschnittliche Körnung von 0 bis 10 mm, vorzugsweise auf eine durchschnittliche Körnung von 0 bis 5 mm verkleinert werden.

Allgemein weist Biomasse im zerkleinerten, getrockneten Zustand eine im Vergleich zu beispielsweise Trockenbraunkohle geringere Schüttdichte auf. In der Regel ist das Volumen vor dem Pressstempel einer Formkanalstempelpresse durch die Pressengeometrie vorgegeben. Deshalb verringert sich mit der Schüttdichte die Masse des zu agglomerierenden Materials pro Pressenhub. Dadurch kann sich unter Umständen die Stärke bzw. Dicke des Brennstoff-Presslings verringern.

Üblicherweise wird der Formkanalstempelpresse das zu agglomerierende Material über den Einfüllschacht im freien Fall zugeführt. Die lose Schüttung fällt bei der Rückwärtsbewegung des Pressstempels vor diesen und wird mit der Vorwärtsbewegung verdichtet. Daraus resultiert, dass der Massenstrom mit der Schüttdichte abnimmt.

Dem kann beispielsweise auch dadurch begegnet werden, dass die physikalischen Eigenschaften des Ausgangsmaterials in Richtung einer größeren Schüttdichte beeinflusst werden. Beispielsweise kann vorgesehen sein, dem biogenen Ausgangsmaterial mit einer ersten Schüttdichte ein biogenes Material mit einer zweiten Schüttdichte beizumischen, wobei die zweite Schüttdichte höher als die erste Schüttdichte ist.

Alternativ kann vorgesehen sein, dass dem biogenen Ausgangsmaterial mit einer ersten Schüttdichte ein nicht biogenes thermisch verwertbares Material mit einer zweiten Schüttdichte beigemischt wird, wobei die zweite Schüttdichte höher als die erste Schüttdichte ist.

Als biogenes Material mit erhöhter Schüttdichte kommen beispielsweise Biomassen wie Nussschalen in Betracht.

Als nicht biogenes, thermisch verwertbares Material kommen beispielsweise Trockenbraunkohlen oder Steinkohlen in Betracht. Die Trockenbraunkohle kann beispielsweise einen Wassergehalt von 5 bis 30 Masseprozent, vorzugsweise 15 bis 25 Masseprozent und eine Körnung von 0 bis 10 mm, vorzugsweise von 0 bis 3 mm aufweisen.

Die Steinkohle kann beispielsweise einen Wassergehalt von 0 bis 15 Masseprozent, vorzugsweise 0 bis 10 Masseprozent und eine Körnung von 0 bis 10 mm, vorzugsweise von 0 bis 3 mm aufweisen.

Grundsätzlich kommt als biogenes Ausgangsmaterial getrocknetes und zerkleinertes Holz mit einem Wassergehalt von etwa 0 bis 30 Masseprozent, vorzugsweise 5 bis 10 Masseprozent und einer Körnung von 0 bis 10 mm, vorzugsweise 0 bis 5 mm in Betracht.

Wenn das Holz beispielsweise hydrophobiert ist, ist der fertige Pressling besonders witterungsbeständig.

Alternativ zu Holz können beispielsweise lignozellulosehaltige Materialien wie Stroh, Miscanthus (Stielblütengras) Anwendung finden.

Je nach Anteil an Bindemittel in den Presslingen kann es sinnvoll sein, die die Formkanalpresse verlassenden Presslinge mechanisch zu vereinzeln.

Die der Erfindung zugrunde liegende Aufgabe wird weiterhin gelöst durch eine Formkanalstempelpresse, insbesondere zur Durchführung des vorstehend beschriebenen Verfahrens, mit wenigstens einem Formkanal, einem in dem Formkanal hin und her beweglich angeordneten Pressstempel, einem Antrieb für translatorische, reziproke Bewegung des Pressstempels und mit Mitteln zur Beschickung des Formkanals mit dem zu agglomerierenden Material, wobei die Formkanalstempelpresse sich durch wenigstens eine Einrichtung zur Vorverdichtung des zu agglomerierenden Materials vor und/oder bei der Beschickung auszeichnet. Als Einrichtung zur Vorverdichtung des zu agglomerierenden Materials kann beispielsweise eine pneumatische Beschickungseinrichtung vorgesehen sein.

Bei einer bevorzugten Variante der Formkanalstempelpresse gemäß der Erfindung umfasst die pneumatische Beschickungseinrichtung Mittel zur Überdruckbeaufschlagung eines mit dem Formkanal kommunizierenden Füllschachts.

Alternativ können auch Mittel zur Unterdruckbeaufschlagung des mit dem Formkanal kommunizierenden Füllschachts vorgesehen sein.

Beispielsweise kann zur Beschickung eine Eintragszellenradschleuse vorgesehen sein, die an einen mit dem Formkanal kommunizierenden Füllschacht angeschlossen ist. Über eine solche Eintragszellenradschleuse kann in besonders günstiger Art und Weise Material in einen unter Überdruck oder unter Unterdruck gesetzten Füllschacht eingeschleust werden.
Alternativ können zur Vorverdichtung des zu agglomerierenden Materials Mittel zur mechanischen Erhöhung des Füllgrades in einem mit dem Formkanal kommunizierenden Füllschacht vorgesehen sein.

Als Mittel zur mechanischen Erhöhung des Füllgrades kann beispielsweise eine sich in dem Füllschacht erstreckende Stopfschnecke vorgesehen sein.

Alternativ kann wenigstens ein sich in dem Füllschacht erstreckender Stopfstempel vorgesehen sein.

Die Formkanalstempelpresse gemäß der Erfindung kann im Bereich des Austrags aus dem Formkanal mit einer Strang-Trennvorrichtung versehen sein.

Die Erfindung wird nachstehend anhand verschiedener Beispiele erläutert werden.

Es zeigen:
- Figur 1: einen Schnitt durch eine Formkanalstempelpresse nach dem Stand der Technik,
- Figur 2: eine schematische Darstellung einer Formkanalstempelpresse mit Schubkurbelantrieb nach dem Stand der Technik,
- Figur 3: eine schematische Darstellung der Kurbelwelle einer Formkanalstempelpresse,
- Figur 4: eine weitere schematische Darstellung der Kurbelwelle einer Formkanalstempelpresse,
- Figur 5: eine schematische Darstellung einer Formkanalstempelpresse mit Schubkurbelantrieb, in welche das nutzbare Volumen vor dem Pressstempel veranschaulicht ist,
- Figur 6: eine der Figur 5 entsprechende Darstellung einer modifizierten Formkanalstempelpresse,
- Figur 7: eine schematische Darstellung einer anderen Variante einer modifizierten Formkanalstempelpresse mit mechanischer Materialzufuhr,
- Figur 8: eine schematische Darstellung einer Formkanalstempelpresse mit einer als Stopfstempel ausgebildeten mechanischen Materialzufuhr,
- Figur 9: eine Formkanalstempelpresse mit pneumatischer Materialzufuhr unter Anwendung von Überdruck,
- Figur 10: eine schematische Darstellung einer Formkanalstempelpresse mit pneumatischer Materialzufuhr unter Anwendung von Unterdruck und
- Figur 11: ein Verfahrensfließbild der Herstellung von Brennstoff-Presslingen auf Biomasse-Basis.

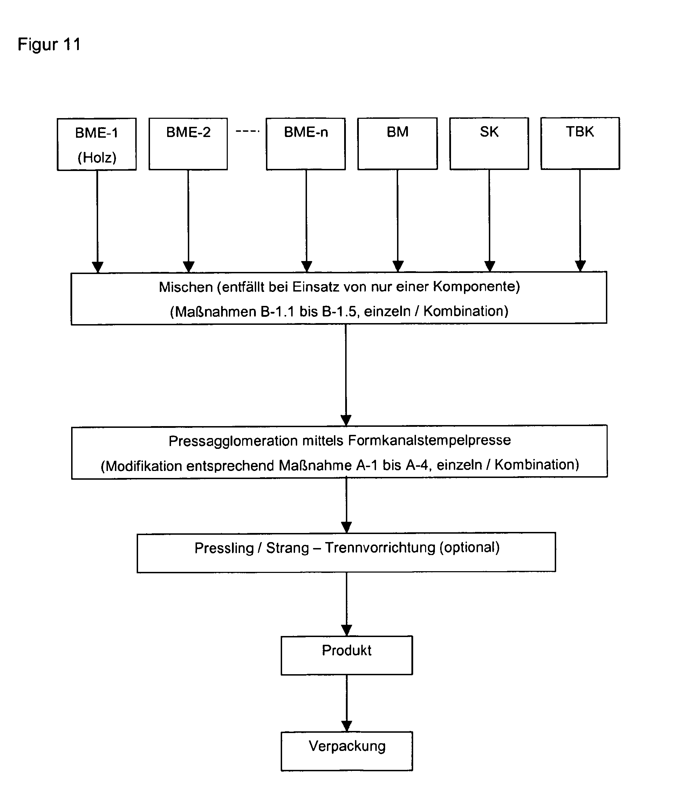

Es wird zunächst Bezug genommen auf das Verfahrensfließbild gemäß Figur 11, in welchem der Begriff "Biomasse" mit "BME-n" abgekürzt ist. Die Abkürzung "BM" bezeichnet ein Bindemittel, "SK" bezeichnet Steinkohle mit einem Wassergehalt von 0 bis 15 Masseprozent, vorzugsweise 0 bis 10 Masseprozent bei einer Körnung von 0 bis 10 mm, vorzugsweise von 0 bis 3 mm. Der Begriff "TBK" bezeichnet Trockenbraunkohle mit einem Wassergehalt von 5 bis 30 Masseprozent, vorzugsweise 15 bis 25 Masseprozent und einer Körnung von 0 bis 10 mm, vorzugsweise 0 bis 3 mm.

Als BME-1 bis BME-n kommen getrocknete, zerkleinerte und ggf. hydrophobierte Biomassen, beispielsweise Holz, Gräser, Stroh oder dergleichen in Betracht. Die Biomasse wird zunächst getrocknet, und zwar auf einen Wassergehalt von 0 bis 30 Masseprozent, vorzugsweise von 5 bis 10 Masseprozent. Die getrocknete Biomasse wird anschließend zerkleinert, beispielsweise auf eine Körnung von 0 bis 10 mm, vorzugsweise von 0 bis 5 mm. Gegebenenfalls wird die Biomasse hydrophobiert.

Erfindungsgemäß ist vorgesehen, verschiedene Biomassen ggf. unter Zusatz von Bindemittel und/oder Steinkohle und/oder Trockenbraunkohle zu einer pressfertigen Masse zu mischen. Bei Einsatz nur einer einzigen Komponente, beispielsweise nur von Holz würde der Mischvorgang selbstverständlich entfallen. Wie eingangs bereits dargelegt wurde, gilt es beim Zusammenstellen und Mischen verschiedener Bestandteile, die Schüttdichte der pressfertigen Mischung im Sinne einer optimalen Verpressbarkeit zu beeinflussen. Auch können die physikalischen Eigenschaften bei der Verpressung durch Hinzugabe anderer organischer Bestandteile sowie Bindemittel beeinflusst werden. Steinkohle und Trockenbraunkohle sind im Sinne der anmeldungsgemäßen Definition nicht als biogenes Ausgangsmaterial anzusehen. Als Bindemittel kommen beispielsweise Stärke, Zellleim, Lignin und dergleichen mit einem Masseanteil von weniger als 15 Masseprozent bezogen auf die Gesamtmischung in Betracht.

Die pressfertige Masse wird sodann einer Pressagglomeration mittels einer Formkanalstempelpresse unterzogen, wobei die Formkanalstempelpresse wie nachstehend noch beschrieben wird, für die Verpressung von biogenem Material modifiziert ist.

Gegebenenfalls sind die aus der Formkanalstempelpresse austretenden Presslinge mittels einer Trennvorrichtung zu vereinzeln. Das aus der Formkanalstempelpresse austretende, ggf. vereinzelte Produkt ist fertig verwertbar und bedarf in der Regel keiner weiteren Nachbehandlung.

Überraschenderweise hat sich herausgestellt, dass sich eine Formkanalstempelpresse zur Herstellung der erfindungsgemäßen Presslinge besonders eignet.

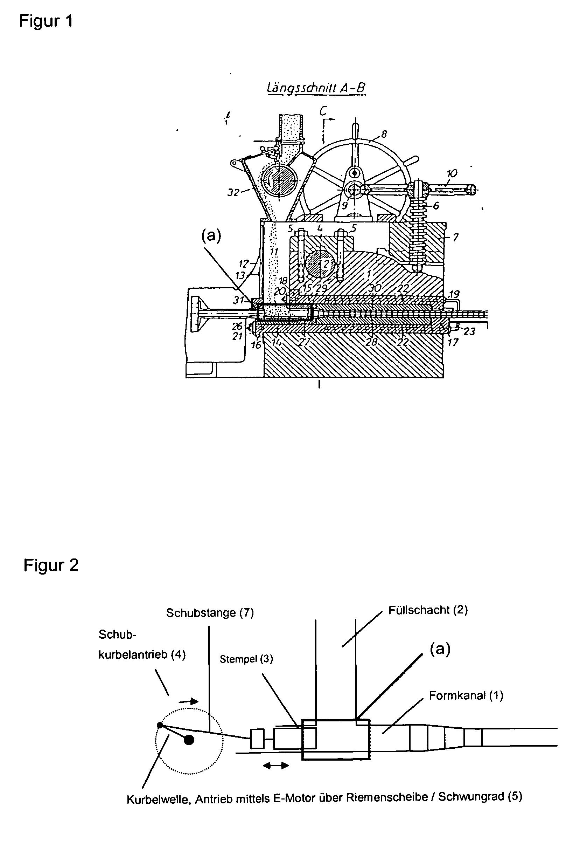

Eine solche Formkanalstempelpresse ist beispielsweise in Figur 2 dargestellt. Diese umfasst einen sich horizontal erstreckenden Formkanal 1, einen sich etwa senkrecht hierzu erstreckenden Füllschacht 2, über welchen die Materialbeschickung erfolgt, einen in dem Formkanal hin und her bewegbaren Pressstempel 3 und einen Schubkurbelantrieb 4 mit einem Schwungrad 5, einer Kurbelwelle 6 und einer Schubstange 7. In bekannter Art und Weise wird die Hin- und Her-Bewegung der Schubstange 7 über die Drehung des Schwungrades 5 bewerkstelligt. Alternativ kann anstelle des beschriebenen Schubkurbelantriebs ein Kniegelenkantrieb vorgesehen sein, dessen Kinematik ebenfalls bekannt ist.

Bei der in Figur 2 dargestellten bekannten Formkanalstempelpresse wird das zu agglomerierende Material über den Füllschacht 2 nur durch Einwirkung der Schwerkraft im freien Fall zugeführt. Die lose Schüttung fällt bei der Rückwärtsbewegung des Pressstempels 3 vor diesen und wird mit der Vorwärtsbewegung verdichtet. Auf diese Art und Weise wird der Massenstrom mittels dem Pressstempel 3 in den sich in Förderrichtung verjüngenden Formkanal 1 gepresst.

Da der Massenstrom mit der Schüttdichte abnimmt, sind zur Verpressung von Materialien geringer Schüttdichte, wie beispielsweise zur Verpressung von biogenem Ausgangsmaterial besondere Maßnahmen erforderlich, um Presslinge gewünschter Stärke bzw. Dicke trotz verhältnismäßig geringer Schüttdichte zu erhalten.

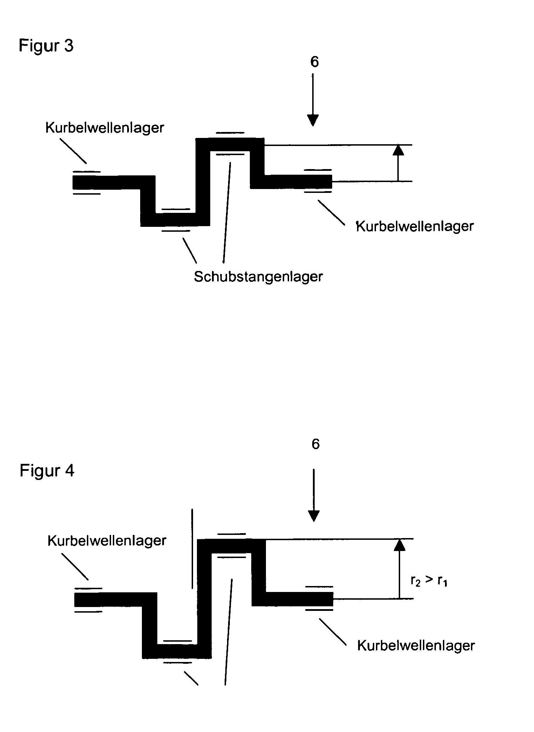

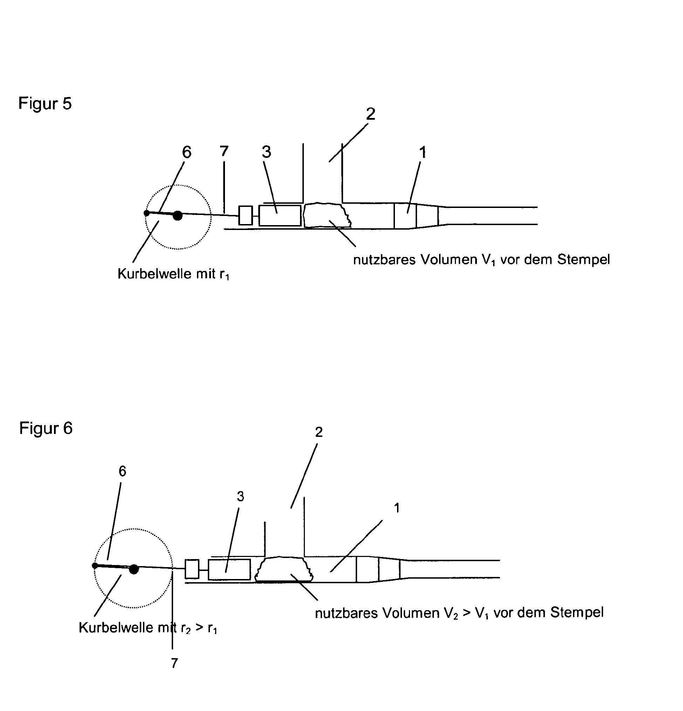

Erfindungsgemäß ist die Formkanalstempelpresse zunächst einmal so verändert, dass das nutzbare Volumen vor dem Pressstempel vergrößert ist. Hierzu wird Bezug genommen auf die Figuren 3 bis 6. Durch Vergrößerung des Radius der Kurbelwelle (Abstand zwischen Kurbelwellenlager und Schubstangenlager) wird der Hub des Pressstempels 3 vergrößert. Infolgedessen verlagert sich der hintere Todpunkt des Pressstempels 3 nach hinten (entgegen der Pressrichtung), wodurch sich das nutzbare Volumen vor dem Pressstempel 3 vergrößert, ohne dass es hierzu erforderlich wäre, die Formzeug- bzw. Formkanalgeometrie zu ändern.

Des Weiteren können herkömmliche für die Verpressung von Trockenbraunkohle vorgesehene Formkanalstempelpressen im Hinblick auf die Formzeug- bzw. Formkanalgeometrie modifiziert werden.

Als zusätzliche oder alternative Maßnahme kann vorgesehen sein, das im Formkanal 1 zuzuführende Material vorzuverdichten.

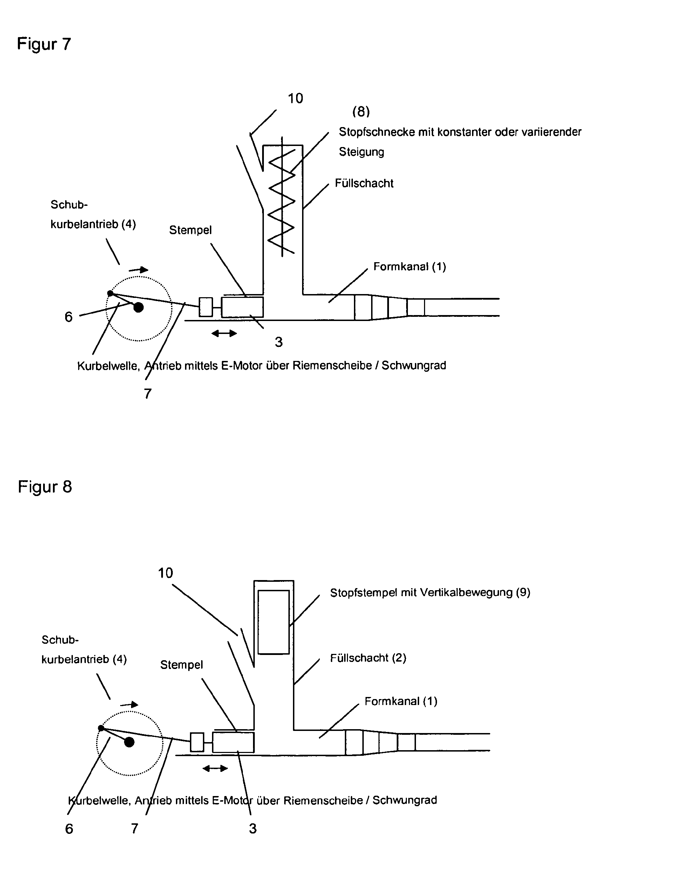

Beispielsweise zeigt die Figur 7 eine Formkanalstempelpresse mit einer mechanischen Materialzufuhr in Form einer Stopfschnecke 8, die sich in dem Füllschacht 2 erstreckt.

Das zu agglomerierende Material wird während der Vorwärtsbewegung des Pressstempels 3 eingezogen und oberhalb des Pressstempels 3 mittels der Stopfschnecke 8 vorverdichtet. Auf diese Art und Weise wird der Füllgrad des Volumens vor dem Pressstempel 3 beachtlich vergrößert.

Die Stopfschnecke 8 kann hierzu mit einer veränderbaren Drehzahl betreibbar sein. Beispielsweise kann vorgesehen sein, bei der Vorwärtsbewegung des Pressstempels 3 mit geringerer Drehzahl eine geringere Materialmenge einzuziehen. Mit beginnender Rückwärtsbewegung des Pressstempels 3 wird die Drehzahl der Stopfschnecke 8 erhöht. Infolgedessen wird das zu agglomerierende Material in verdichteter Form vor den Pressstempel 3 gedrückt.

Eine alternative Variante ist in Figur 8 dargestellt. Innerhalb des Füllschachts 2 ist ein Stopfstempel 9 vorgesehen, der eine reziproke Vertikalbewegung vollzieht. Wie bei dem in Figur 7 beschriebenen Ausführungsbeispiel wird das zu agglomerierende Material durch einen seitlich in den Füllschacht 2 mündenden Einzug 10 bereitgestellt. Der Antrieb des Stopfstempels 9 kann direkt mittels Hydraulik oder Pneumatik oder indirekt mittels Schubkurbel oder Kniegelenk erfolgen. Bei einem direkten Stempelantrieb können Hydraulik, Elektro- oder Druckluftmotoren zum Einsatz kommen. Ferner ist eine Kraftübertragung von Pressenkurbelwelle auf Schubkurbel bzw. Kniegelenksantrieb möglich. Letzteres würde den Vorteil einer höchstmöglichen Synchronität bieten.

Das zu agglomerierende Material fällt in den Füllschacht 2 und wird mittels des Stopfstempels 9 vor den Pressstempel 3 gedrückt. Beide Stempel arbeiten synchron, sodass auf diese Art eine besonders effektive Vorverdichtung des zu agglomerierenden Materials bewirkt wird.

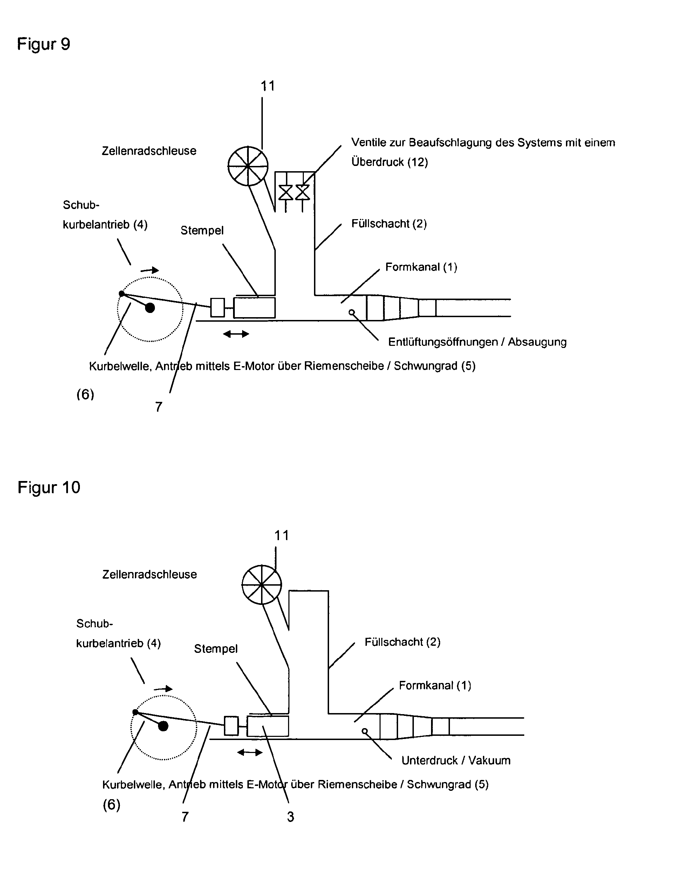

Eine weitere Variante der Formkanalstempelpresse mit Maßnahmen zur Verbesserung des Füllgrades des Formkanals ist in Figur 9 dargestellt. Das zu agglomerierende Material wird über eine Zellenradschleuse 11 dem Füllschacht 2 zugeführt und mittels Überdruck in den Formkanal 1 vor den Pressstempel 3 gedrückt. Das Formzeug weist nicht dargestellte Entlüftungsöffnungen bzw. Mittel zur Absaugung auf, um die überschüssige Luft im Formkanal 1 abzuführen und die Rückexpansion komprimierter Luft zu minimieren. Im Übrigen ist der Füllschacht 2 mittels der schematisch eingezeichneten Ventile 12 hermetisch absperrbar, um die Anordnung unter Überdruck setzen zu können. Alternativ wird das zu agglomerierende Material, wie dies in Figur 10 dargestellt ist, über die Zellenradschleuse 11 einem gegenüber Atmosphärendruck mit Unterdruck beaufschlagten Füllschacht 2 zugeführt. Hierzu wird im Bereich des Formzeuges ein Unterdruck/Vakuum angelegt. Für einen Druckausgleich sind im Füllschacht 2 ebenfalls nicht eingezeichnete Atmungsventile vorgesehen.

Wie eingangs bereits erwähnt wurde, kann als zusätzliche Maßnahme zu der Modifikation der Formkanalstempelpresse vorgesehen sein, das Ausgangsmaterial im Hinblick auf die Schüttdichte zu modifizieren. Hierzu ist es beispielsweise möglich, mehrere biogene Ausgangsmaterialien mit unterschiedlicher Schüttdichte zu mischen. Darüber hinaus kann vorgesehen sein, die Schüttdichte durch Mischung von biogenen Ausgangsmaterialien mit unterschiedlicher Partikelgröße zu erhöhen, um ein polydisperses System mit erhöhter Schüttdichte zu erhalten. Schließlich kann die Schüttdichte durch Zumischen von Trockenbraunkohle oder Steinkohle, vorzugsweise durch Zumischen von backender Steinkohle erhöht werden.

Durch die Zugabe eines oder mehrerer Bindemittel während des Mischprozesses kann eine Voragglomeration der zu verpressenden Masse erreicht werden, wodurch ebenfalls die Schüttdichte verändert wird.

### Bezugszeichenliste

- 1: Formkanal
- 2: Füllschacht
- 3: Pressstempel
- 4: Schubkurbelantrieb
- 5: Schwungrad
- 6: Kurbelwelle
- 7: Schubstange
- 8: Stopfschnecke
- 9: Stopfstempel
- 10: Einzug
- 11: Zellenradschleuse
- 12: Ventile

## Patentansprüche

1. Verfahren zur Herstellung von Brennstoff-Presslingen auf der Basis von Biomasse, wobei das biogene Ausgangsmaterial getrocknet und zerkleinert wird, und das getrocknete und zerkleinerte Material durch Pressagglomeration stückig gemacht wird und wobei die Pressagglomeration unter Verwendung einer Formkanalstempelpresse erfolgt.

2. Verfahren nach Anspruch 1, **dadurch gekennzeichnet, dass** dem biogenen Ausgangsmaterial vor der Verpressung ein Bindemittel beigemischt wird.

3. Verfahren nach einem der Ansprüche 1 oder 2, **dadurch gekennzeichnet, dass** das biogene Ausgangsmaterial auf einen Wassergehalt von 0 bis 30 Masseprozent, vorzugsweise auf einen Wassergehalt von 5 bis 10 Masseprozent getrocknet wird.

4. Verfahren nach einem der Ansprüche 1 bis 3, **dadurch gekennzeichnet, dass** das biogene Ausgangsmaterial auf eine durchschnittliche Körnung von 0 bis 10 mm, vorzugsweise von 0 bis 5 mm zerkleinert wird.

5. Verfahren nach einem der Ansprüche 1 bis 4, **dadurch gekennzeichnet, dass** das zu agglomerierende Material vor und/oder bei Eintrag in Formkanalstempelpresse vorverdichtet wird.

6. Verfahren nach einem der Ansprüche 1 bis 5, **dadurch gekennzeichnet, dass** das getrocknete und zerkleinerte biogene Ausgangsmaterial unter Beimischung von Bindemittel voragglomeriert wird.

7. Verfahren nach einem der Ansprüche 1 bis 6, **dadurch gekennzeichnet, dass** dem biogenen Ausgangsmaterial mit einer ersten Schüttdichte ein biogenes Material mit einer zweiten Schüttdichte beigemischt wird, wobei die zweite Schüttdichte höher als die erste Schüttdichte ist.

8. Verfahren nach einem der Ansprüche 1 bis 6, **dadurch gekennzeichnet, dass** dem biogenen Ausgangsmaterial mit einer ersten Schüttdichte ein nicht biogenes thermisch verwertbares Material mit einer zweiten Schüttdichte beigemischt wird, wobei die zweite Schüttdichte höher als die erste Schüttdichte ist.

9. Verfahren nach einem der Ansprüche 1 bis 8, **dadurch gekennzeichnet, dass** die die Formkanalstempelpresse verlassenen Presslinge mechanisch vereinzelt werden.

10. Formkanalstempelpresse, insbesondere zur Durchführung des Verfahrens nach einem der Ansprüche 1 bis 9, mit wenigstens einem Formkanal (1), einem in dem Formkanal (1) hin und her beweglich angeordneten Pressstempel (3), einem Antrieb für die translatorische, reziproke Bewegung des Presstempels (3) und Mitteln zur Beschickung des Formkanals (1) mit dem zu agglomerierenden Material, **gekennzeichnet durch** wenigstens eine Einrichtung zur Vorverdichtung des zu agglomerierenden Materials vor und/oder bei der Beschickung.

11. Formkanalstempelpresse nach Anspruch 10, **dadurch gekennzeichnet, dass** als Einrichtung zur Vorverdichtung des zu agglomerierenden Materials eine pneumatische Beschickungseinrichtung vorgesehen ist.

12. Formkanalstempelpresse nach Anspruch 11, **dadurch gekennzeichnet, dass** die pneumatische Beschickungseinrichtung Mittel zur Überdruckbeaufschlagung eines mit dem Formkanal (1) kommunizierenden Füllschachts (2) umfasst.

13. Formkanalstempelpressen nach Anspruch 11, **dadurch gekennzeichnet, dass** die pneumatische Beschickungseinrichtung Mittel zur Unterdruckbeaufschlagung eines mit dem Formkanal (1) kommunizierenden Füllschachts (2) umfasst.

14. Formkanalstempelpresse nach einem der Ansprüche 10 bis 13, **dadurch gekennzeichnet, dass** zur Beschickung eine Eintragszellenradschleuse (11) vorgesehen ist, die an einen mit dem Formkanal (1) kommunzierenden Füllschacht (2) angeschlossen ist.

15. Formkanalstempelpresse nach einem der Ansprüche 10 oder 11, **dadurch gekennzeichnet, dass** als Einrichtung zur Vorverdichtung des zu agglomerierenden Materials Mittel zur mechanischen Erhöhung des Füllgrades in einem mit dem Formkanal (1) kommunizierenden Füllschacht (2) vorgesehen sind.

16. Formkanalstempelpresse nach Anspruch 15, **dadurch gekennzeichnet, dass** als Mittel zur mechanischen Erhöhung des Füllgrades wenigstens eine sich in dem Füllschacht (2) erstreckende Stopfschnecke (8) vorgesehen ist.

17. Formkanalstempelpresse nach Anspruch 15, **dadurch gekennzeichnet, dass** als Mittel zur Erhöhung des Füllgrades wenigstens ein sich in dem Füllschacht (2) erstreckender Stopfstempel (9) vorgesehen ist.

18. Formkanalstempelpresse nach einem der Ansprüche 10 bis 16, **gekennzeichnet durch** eine Strang-Trennvorrichtung am Austrag des Formkanals (2).
